# EUROPÄISCHE PATENTSCHRIFT

(11) **EP 0 315 874 B1**
(45) Veröffentlichungstag und Bekanntmachung des Hinweises auf die Patenterteilung: **18.05.1994**
(21) Anmeldenummer: 88118179.6
(22) Anmeldetag: 02.11.1988
(51) Int. Cl.: B29D 11/00, G02B 6/28

(54) **Verfahren zur Herstellung eines optischen Kopplers für Polymer-Lichtwellenleiter**
Method for manufacturing an optical coupler for polymer light guides
Procédé pour la fabrication d'un coupleur optique à guides d'ondes polymères

(30) Priorität: 07.11.1987 DE 3737930
(43) Veröffentlichungstag der Anmeldung: 17.05.1989
(73) Patentinhaber: HOECHST AKTIENGESELLSCHAFT, 65926 Frankfurt am Main (DE)
(72) Erfinder: Coutandin, Jochen, Dr., D-6536 Langenlonsheim (DE); Theis, Jürgen, Dr., D-6000 Frankfurt am Main (DE); Groh, Werner, Dr., D-6000 Frankfurt am Main 71 (DE); Herbrechtsmeier, Peter, Dr., D-6240 Königstein/Taunus (DE)

(56) Entgegenhaltungen:
- EP-A- 0 219 096
- FR-A- 2 564 984
- US-A- 3 455 625
- US-A- 4 240 694
- PATENT ABSTRACTS OF JAPAN, Band 5, Nr. 126 (P-75)[798], 14. August 1981;& JP-A-56 66 812 (FUJITSU K.K.) 05-06-1981
- PATENT ABSTRACTS OF JAPAN, Band 11, Nr. 52 (P-548)[2499], 18. Februar 1987;& JP-A-61 219 010 (FURUKAWA ELECTRIC CO., LTD) 29-09-1986

## Beschreibung

Die Erfindung bezieht sich auf ein Verfahren zur Herstellung eines optischen Kopplers für Polymer-Lichtwellenleiter gemäß dem Oberbegriff des Patentanspruchs 1.

In passiven Lichtwellenleiternetzen dienen Koppler als optische Bauelemente zum Aufteilen der Lichtsignale von ankommenden Lichtwellenleitern auf abgehende Lichtwellenleiter. Derartige Koppler bestehen aus einem transparenten Körper, welcher an der Lichteintritts- und an der Lichtaustrittsseite mit Lichtwellenleitern verbunden ist (US-A-4 240 694). Neben den Kopplern, die durch Zusammenkleben oder Zusammenschmelzen von transparenten Formkörpern mit Lichtwellenleitern entstehen, sind auch Koppler bekannt, zu deren Herstellung Lichtwellenleiterbündel verdrillt und an der Verdrillstelle verstreckt werden (vgl. Agarwal, Fiber Integr. Optics 6 (1), 27-53, 1987).

Es sind ebenfalls Koppler bekannt, die durch Verstrecken von Lichtwellenleitern bei gleichzeitiger Wärmeeinwirkung in speziellen Vorrichtungen hergestellt werden (FR-A-256 4984). Oftmals erfolgt die Herstellung der Koppler auch durch einen kombinierten Verdrill-, Verstreck- und Schmelzprozeß (EP-A-0 219 096). In JP-A-61-219 010 wird ein Verfahren zum Verschmelzen von mit Kunststoff beschichteten Lichtwellenleiterenden aus Glas beschrieben.

In der JP-A-56-66812 wird ein Verfahren zum Verbinden von Polymer-Lichtwellenleiterenden beschrieben, das dadurch gekennzeichnet ist, daß beim Verbinden der Lichtwellenleiter ein doppelwandiges, unter Wärmeeinwirkung schrumpfbares Rohr eingesetzt wird. Dessen innere Schicht besteht aus einem durchsichtigen Harz, dessen Brechzahl niedriger als die des Kernmaterials des o.g. Lichtwellenleiters ist, und dessen Innendurchmesser größer ist als der Außendurchmesser des o.g. Lichtwellenleiters. Das Rohr wird als Verbindungsstück verwendet, in das die Kerne der zu verbindenden Lichtwellenleiter so einzulegen sind, daß deren Stirnflächen aneinander anliegen können. Durch die darauf folgende Wärmebehandlung (bis zu 327°C) wird das Verbindungsrohr unter Zusammenschrumpfung zum Erstarren gebracht.

In US-A-3 455 625 wird ein Verfahren zur Herstellung optischer Koppler beschrieben, wobei die Enden zweier Bündel von Lichtwellenleitern, die jeweils mit Hilfe eines Schlauches gebündelt werden, unter Verwendung eines weiteren Schlauches eines Schrumpfschlauches, miteinander verbunden werden. Der Schrumpfschlauch wird mit einer polymerisationsfähigen, transparenten Verbindung gefüllt, über beide Bündelenden gestülpt (Fig. 2) und erhitzt. Durch das Erhitzen wird eine Polymerisationsreaktion ausgelöst, wodurch sich der Mischbereich des optischen Kopplers ausbildet. Beim Abkühlen schrumpft der Schrumpfschlauch und schmiegt sich an den Mischbereich und an die beiden Verbindungsstellen, die die zwei Bündel von Lichtwellenleitern mit dem Mischbereich verbinden, an.

Die nach dem in US-A-3 455 625 beschriebenen Verfahren herstellten optischen Koppler besitzen jedoch auf Grund der konstruktionsbedingten Flächenverluste relativ hohe optische Verluste. Dies liegt zum einen daran, daß die beiden Flächen des Mischbereichs des optischen Kopplers, an denen die zu- und abgehenden Lichtwellenleiter angebracht sind, nie vollständig durch die kreisförmigen Stirnflächen der angebrachten Lichtwellenleiter "abgedeckt" werden können.

Darüber hinaus besitzen die gemäß US-A-3 455 625 herstellbaren Koppler an den Verbindungsstellen zwischen Mischbereich und den angesetzten Lichtwellenleiterenden "Schwachstellen", an denen die Gefahr eines Bruchs bei einer mechanischen Belastung relativ hoch ist. Die mechanische Stabilität ist somit unzureichend und verbesserungsbedürftig.

Generell ist die Herstellung zusammengesetzter Koppler aufwendig und teuer. Außerdem ist die Durchgangsdampfung der bekannten Koppler schwer reproduzierbar. Die Leistung zwischen verschiedenen Ausgangsfasern schwankt um mehr als 1 dB.

Es bestand daher die Aufgabe, ein Verfahren zu finden, nach welchem man Koppler einfach und kostengünstig herstellen kann und welches Koppler mit niedriger Ausgangsdämpfung und geringen Schwankungen der Leistung zwischen den Ausgangsfasern liefert.

Diese Aufgabe wird gemäß der Erfindung durch die Merkmale des Anspruchs 1 gelöst. Zweckmäßige Weiterbildungen der Erfindung sind Gegenstand der abhängigen Ansprüche.

Es wurde gefunden, daß man auf einfache Weise einen hochwirksamen Koppler herstellen kann, wenn man zum Bündeln und Verschmelzen der Lichtwellenleiter ein Stück Kunststoff-Schrumpfschlauch verwendet.

Für das erfindungsgemäße Verfahren werden zwei bis 10⁵, vorzugsweise 2 bis 1000 Polymer-Lichtwellenleiter gleichsinnig angeordnet und gebündelt. Es ist möglich, die Lichtwellenleiter zu verdrillen. Über das Bündel wird ein Stück Kunststoff-Schrumpfschlauch über die vorgesehene Knotenstelle geschoben. Das Stück Schrumpfschlauch hat eine Länge von 5 bis 200, vorzugsweise 10 bis 100 mm und einen Durchmesser von 0,5 bis 50, vorzugsweise 1 bis 20 mm.

Der Schrumpfschlauch besteht aus einem Polyolefin, Polyvinylchlorid, Polyvinylidenfluorid, Polytetrafluorethylen, Polychloropren, Vinylidenfluorid-Hexafluorpropylen-Copolymer, Silikonkautschuk, Polyester, fluorierten Ethylen-Propylen-Copolymer oder Polyfluoralkoxy-Copolymer, vorzugsweise aus einem Polyolefin, Polyvinylchlorid, Polyvinylidenfluorid oder Silikonkautschuk.

Der Schrumpfschlauch kann schwarz, transparent oder farbig sein. Falls er transparent ist, liegt sein Brechungsindex n zweckmäßigerweise im Bereich von 1,35 bis 1,6. Es ist auch möglich, einen Schrumpfschlauch zu verwenden, dessen Innenwand mit einem thermoplastischen Kunststoff mit einem Brechungsindex n von 1,35 bis 1,6 beschichtet ist. Der Schrumpfschlauch mit Innenbeschichtung besteht im allgemeinen aus einem Polyolefin.

Weiterhin ist es möglich, Dualschrumpfschläuche zu verwenden. Diese Schläuche bestehen aus einem inneren und einem äußeren Schrumpfschlauch. Bei Erreichen der Schrumpftemperatur des äußeren Schlauches ist der innere Schlauch bereits thermoplastisch. Der Druck, den der äußere Schrumpfschlauch ausübt, reicht aus, um eine gute Verbindung zwischen Schrumpfschlauch und Polymer-Lichtwellenleitern herzustellen.
Denkbar ist es auch, das Faserbündel vor dem Drüberschieben des Schrumpfschlauches mit einem transparenten, thermoplastischen Band oder einer Folie zu umwickeln. Das Band oder die Folie wird ab einer bestimmten Temperatur, die über oder unter der Schrumpftemperatur des Schlauches liegen kann, thermoplastisch und dient, speziell bei Verwendung von nichtummantelten Polymer-Lichtwellenleitern, als optischer Isolator. Der Brechungsindex des Bandes oder der Folie muß dann kleiner als der des Polymer-Lichtwellenleiter-Kernes sein.

Sodann wird das Stück Kunststoff-Schrumpfschlauch auf eine Temperatur von 50 bis 330 °C, vorzugsweise 80 bis 220 °C erhitzt. Dabei verkleinert sich der Durchmesser des Schlauches um einen von der Art des Schrumpfschlauches abhängigen Wert, im allgemeinen um das Verhältnis 1,2:1 bis 4:1.

Ist die Erhitzungstemperatur T des Schlauches niedriger als die Erweichungstemperatur T_{E} der Lichtwellenleiter, so tritt eine dichte Bündelung der Leiter ein, ist T höher als T_{E}, so schmelzen die einzelnen Leiter zusammen. Dabei kann das mit dem Schrumpfschlauch umgebene Faserbündel während oder nach dem Erhitzen symmetrisch oder asymmetrisch verstreckt werden, so daß sich ein doppelt-konisches Profil mit einer Taille in der Mitte (biconical taper) bildet. Dieses doppelt-konische Profil kann auch ohne Verstrecken dadurch ereicht werden, daß man die Mitte des Schrumpfschlauches stärker erhitzt als die Enden.

Die Wandstärke des Schrumpfschlauches im geschrumpften Zustand liegt im Bereich von 0,1 bis 4 mm.

Das erfindungsgemäße Verfahren ist geeignet für alle Polymer-Lichtwellenleiter mit und ohne optischem Mantel oder Polymer-Lichtwellenleiter, deren Mantel in dem zu verschmelzenden Bereich mechanisch oder chemisch entfernt wurde. Dabei werden für Koppler für die Übertragung von Daten-Lichtsignalen vorzugsweise Lichtwellenleiter ohne optischen Mantel an der Verbindungsstelle, für Faserbündel für Beleuchtungszwecke vorzugsweise solche mit Mantel verwendet. Geeignete Lichtwellenleiter, welche thermoplastisch verarbeitbar sein sollen, haben einen Druchmesser von 0,1 bis 3, vorzugsweise 0,5 bis 1,5 mm und einen Kern von beispielsweise PMMA (Kernbrechungsindex n_{K} = 1,49), PS (n_{K} = 1,59) oder PC (n_{K} = 1,585).

Mit Hilfe des erfindungsgemäßen Verfahrens lassen sich die verschiedenartigsten Koppler vorteilhaft herstellen.

Für Sternkoppler, bei denen die Zahl der am transparenten Körper (= Mischer) ankommenden und abgehenden Lichtwellenleiter gleich ist (= Sternkoppler mit Transmissionsmischer), liegen die Vorteile in der sehr einfachen und kostengünstigen Herstellungstechnik und in den sehr guten Übertragungseigenschaften, speziell der geringen Leistungsschwankung zwischen den einzelnen Toren. Ein weiterer Vorteil ist die durch den Herstellungsprozeß automatisch bedingte mechanische Festigkeit des Mischerstabes, der nicht mehr extra stabilisiert werden muß.

Auch für sogenannte T-Koppler (ein Eingang - zwei Ausgänge oder zwei Eingänge - ein Ausgang) liegt ein Vorteil in der sehr einfachen Herstellungsweise und guten Übertragungseigenschaften. Ein weiterer Vorteil besteht in dem identischen Durchmesser der Ein- und Ausgänge, so daß Stecker ohne Probleme montiert werden können.
Die mechanische Festigkeit des Mischerstabes wird auch hier durch den Schrumpfschlauch bewirkt.

Das erfindungsgemäße Verfahren läßt sich auch mit Vorteil für die Herstellung von Faserbündeln für Beleuchtungszwecke anwenden, indem ein Sternkoppler gefertigt und halbiert wird. Auch hier liegt der Vorteil in der sehr einfachen Herstellungstechnik sowie in der sehr hohen Lichttransmission des Bündels, die dadurch erreicht wird, daß an der Stirnfläche des Bündels zwischen den Einzelfasern kein Freiraum vorhanden ist (Zwickel genannt), der zu Lichtverlusten führt.

Die folgenden Beispiele erläutern die Erfindung.

### Beispiel 1

### Herstellung eines 4x4 Sternkopplers mit Transmissionsmischer

Vier 20 m lange Kunststofflichtwellenleiter aus PMMA ohne optischen Mantel mit einem Durchmesser von jeweils 0,5 mm wurden ungeordnet gebündelt. Der Brechungsindex der Faser betrug n = 1,49.
Danach wurde ein 3 cm langer transparenter Schrumpfschlauch aus Polyvinylidenfluorid mit einem Innendurchmesser von 1,2 mm über dieses Bündel gezogen und dort in der Mitte plaziert. Der Brechungsindex des Schrumpfschlauches betrug n = 1,42.
Danach wurden die Enden des Bündels fixiert und die Temperatur im Bereich des Schrumpfschlauches auf 180 °C erhöht. Beim Erreichen dieser Temperatur begann der Schrumpfschlauch zu schrumpfen und die Fasern, deren Erweichungstemperatur unterhalb von 180 °C lag, wurden miteinander verschmolzen. Der verschmolzene Bereich (Mischerstab genannt) hatte eine runde Form mit einer Länge 1 = 2,5 cm und einem Durchmesser d = 1 mm. Da der Polyvinylidenfluorid-Schrumpfschlauch mit n = 1,42 einen kleineren Brechungsindex besaß als PMMA (n = 1,49), wirkte der Schrumpfschlauch gleichzeitig als optischer Mantel. An der Grenzschicht Mischerstab/Polyvinylidenfluorid-Schrumpfschlauch wurde das in dem Mischer verlaufende Licht totalreflektiert, so daß fast kein Licht nach außen dringen konnte. Der Schrumpfschlauch diente gleichzeitig als Schutzhülle für den spröden Mischer. Die überstehenden Enden wurden in einem Bad, mit Polysiloxan-Hartlack als Badflüssigkeit, tauchlackiert. Da das Polysiloxan mit n = 1,43 einen niedrigeren Brechungsindex als derjenige des Fasermaterials (n = 1,49) besaß, wirkte die Lackschicht als total-reflektierender optischer Mantel.

Der 4x4 Sternkoppler mit dem Transmissionsmischer hatte eine Druchgangsdämpfung von 10 dB mit einer Leistungsschwankung zwischen beliebigen Ausgangsfasern von 0,6 dB.

### Beispiel 2

### Herstellung eines 1x2 Kopplers (T-Koppler)

Es wurden zwei 15 cm lange und 1 mm dicke Polystyrol-Lichtwellenleiter mit PMMA als Mantelmaterial parallelisiert und verdrillt. Vorher wurde in zu verschmelzenden Bereich der PMMA-Mantel mechanisch entfernt. Die Brechungsindices von PS und PMMA betrugen n = 1,59 bzw. n = 1,49.
Danach wurde ein 4 cm langer Polyolefin-Schrumpfschlauch mit einem Innendurchmesser von d = 2 mm über die Stelle der verdrillten Fasern gezogen, an der der Mantel mechanisch entfernt worden war. Die beiden Enden des Bündels wurden fixiert.
Beim Erhitzen über 150 °C in einer Heizpatrone zog sich der Schlauch zusammen. Durch die Schrumpfkraft wurden die verdrillten Fasern, die bei 150 °C thermoplastisch verarbeitbar waren, miteinander verschmolzen. Der Durchmesser des verschmolzenen Bereiches (Mischerstab genannt) betrug d = 1,4 mm. Sodann wurde der Mischerstab bei einer Temperatur von 140 °C zusammen mit dem Schrumpfschlauch solange verstreckt, bis der Mischerstab den Durchmesser der Einzelfaser von 1 mm erreicht hatte. Nach dem Abkühlen wurde der Mischerstab in seiner Mitte getrennt und der Schrumpfschlauch am getrennten Mischerstabende über einen Bereich von 1 cm entfernt. Das freigelegte Ende wurde, wie in Beispiel 1 beschrieben, tauchlackiert.
Der 1x2-Koppler hatte ein Lichtleistungs-Aufteilverhältnis von 1:1 mit einer Durchgangsdämpfung von 4,2 dB.

### Beispiel 3

### Herstellung eines Faserbündels für Beleuchtungszwecke

Es wurden 300 ummantelte PMMA-Lichtleitfasern mit einem Einzeldurchmesser von 0,5 mm und einer Länge von 1 m gebündelt. An einem Bündelende wurde ein Polyolefin-Schrumpfschlauch mit einem Innendurchmesser von 12 mm und einer Länge von 8 cm übergezogen. die beiden Enden des Faserbündels wurden unter leichter Spannung fixiert. Das mit dem Schrumpfschlauch überzogene Ende wurde in einer zylinderförmigen, hohlen Heizpatrone auf über 140 °C erwärmt. Der Schrumpfschlauch verengte sich und durch die wirkende Schrumpfkraft wurden die Fasern miteinander verschmolzen. Nach dem Abkühlen wurde das Bündel am geschrumpften Ende um 3 cm gekürzt, und die Stirnfläche des Bündels poliert.
Der Durchmesser des verschmolzenen Endes des Faserbündels betrug 8,6 mm. Dieses Beleuchtungsbündel zeigte eine Lichttransmission von 78%.

## Patentansprüche

1. Verfahren zur Herstellung eines optischen Kopplers für Polymer-Lichtwellenleiter durch gleichsinniges Ordnen und Bündeln dar Lichtwellenleiter und Verbinden derselben wobei die Polymer-Lichtwellenleiter mit einem Stück Kunststoff-Schrumpfschlauch überzogen werden, dadurch gekennzeichnet, daß man zwei bis 10⁵ Polymer-Lichtwellenleiter mit einem Stück Kunststoff-Schrumpfschlauch überzieht, dessen Länge Kürzer als die Länge der Lichtwellenleiter ist, diesen in der Mitte Lichtwellenleiter plaziert, und dort die Schrumpfschlauch-Lichtwellenleiter-Anordnung auf eine Temperatur im Bereich von 50 bis 330 °C erhitzt, so daß die Lichtwellenleiter miteinander verschmelzen.

2. Verfahren nach Anspruch 1, dadurch gekennzeichnet, daß man das Lichtwellenleiterbündel während oder nach dem Erhitzen verstreckt.

3. Verfahren nach Anspruch 1, dadurch gekennzeichnet, daß der Schrumpfschlauch in der Mitte stärker erhitzt wird als an den Enden.

4. Verfahren nach Anspruch 1, dadurch gekennzeichnet, daß der Schrumpfschlauch aus einem Polyolefin, Polyvinylchlorid, Polyvinylfluorid, Polytetrafluorethylen, Polychloropren, Vinylidenfluorid-Hexafluorpropylen-Copolymer, Silikonkautschuk, Polyester, fluoriertem Ethylen-Propylen-Copolymer oder Perfluoralkoxy-Copolymer besteht.

5. Verfahren nach Anspruch 1, dadurch gekennzeichnet, daß man Lichtwellenleiter verwendet, welche an der Verbindungsstelle keinen optischen Mantel besitzen.

## Claims

1. A process for producing an optical coupler for polymer optical waveguides by unidirectional arrangement and bundling of the optical waveguides and linking of the same, the polymer optical waveguides being enveloped with a piece of plastic shrink sleeve, wherein two to 10⁵ polymer optical waveguides are enveloped with a piece of plastic shrink sleeve having a length shorter than the length of the optical waveguides, this sleeve is placed in the middle of the optical waveguides, and at this point the shrink sleeve/optical waveguide assembly is heated to a temperature in the range from 50 to 330°C so that the optical waveguides fuse together.

2. The process as claimed in claim 1, wherein the bundle of optical waveguides is stretched during or after the heating.

3. The process as claimed in claim 1, wherein the shrink sleeve is heated more intensely in the middle than at the ends.

4. The process as claimed in claim 1, wherein the shrink sleeve is composed of a polyolefin, polyvinyl chloride, polyvinyl fluoride, polytetrafluoroethylene, polychloroprene, vinylidene fluoride/hexafluoropropylene copolymer, silicone rubber, polyester, fluorinated ethylene/propylene copolymer or perfluoroalkoxy copolymer.

5. The process as claimed in claim 1, wherein optical waveguides are employed which have no optical cladding at the junction.

## Revendications

1. Procédé pour fabriquer un coupleur optique pour des guides d'ondes lumineuses formés d'un polymère moyennant le rangement des guides d'ondes lumineuses dans le même sens et leur tassement en faisceau et leur liaison, les guides d'ondes lumineuses formés d'un polymère étant recouverts d'un morceau de tuyau rétractable en matière plastique, caractérisé en ce qu on recouvre de deux jusqu'à 10⁵ guides d'ondes lumineuses formés d'un polymère avec un morceau de tuyau rétractable en matière plastique et qu'on les chauffe à une température située dans la gamme de 50 à 330°C de sorte que les guides d'ondes lumineuses sont réunis entre eux par fusion.

2. Procédé selon la revendication 1, caractérisé en ce qu'on étire le faisceau des guides d'ondes lumineuses pendant ou après l'échauffement.

3. Procédé selon la revendication 1, caractérisé en ce qu'on chauffe le tuyau rétractable plus fortement en son milieu qu'à ses extrémités.

4. Procédé selon la revendication 1, caractérisé en ce que le tuyau rétractable est constitué par une polyoléfine, du polychlorure de vinyle, du polyfluorure de vinyle, du polytétrafluoroéthylène, du polychloroprène, un copolymère fluorure de vinylidène-hexafluoropropylène, du caoutchouc silicone, un polyester, un copolymère éthylène-propylène fluoré ou un copolymère perfluoralcoxy.

5. Procédé selon la revendication 1, caractérisé en ce qu'on utilise des guides d'ondes lumineuses, qui ne possèdent aucune gaine optique au niveau de la zone de jonction.
